# EUROPÄISCHE PATENTSCHRIFT

(11) **EP 1 600 374 B1**
(45) Veröffentlichungstag und Bekanntmachung des Hinweises auf die Patenterteilung: **17.09.2008**
(21) Anmeldenummer: 05010654.1
(22) Anmeldetag: 17.05.2005
(51) Int. Cl.: B64D 11/02, C02F 1/461, H01M 8/00

(54) **Elektrochemischer Reaktor für Luftfahrzeuge und Verfahren zum Betreiben des elektrochemischen Reaktors**
Electrochemical reactor for aircraft and method for its operation
Réacteur électrochimique et procédé pour son fonctionnement

(30) Priorität: 28.05.2004 DE 102004026227; 03.08.2004 US 598243 P
(43) Veröffentlichungstag der Anmeldung: 30.11.2005
(73) Patentinhaber: Airbus Deutschland GmbH, 21129 Hamburg (DE)
(72) Erfinder: Hoffjann, Claus, 21147 Hamburg (DE); Schuldzig, Hans-Georg, 21635 Jork (DE); Gründel, Harald, 22765 Hamburg (DE); Heinrich, Hans-Jürgen, 22609 Hamburg (DE)
(74) Vertreter: Maiwald Patentanwalts GmbH

(56) Entgegenhaltungen:
- EP-A- 1 357 625
- WO-A-03/078308
- DE-A1- 3 345 956
- DE-A1- 10 216 709
- DE-A1- 10 229 309
- JP-A- 8 306 379
- US-A1- 2003 228 504

## Beschreibung

Die vorliegende Erfindung betrifft Versorgungssysteme in Luftfahrzeugen. Insbesondere betrifft die vorliegende Erfindung einen elektrochemischen Reaktor zur Erzeugung von Energie, Wasserstoff, Sauerstoff und Klarwasser aus Grauwasser, einem kohlenstoffhaltigen Brennstoff und Luft in einem Luftfahrzeug oder Raumfahrzeug, ein Luftfahrzeug mit einem elektrochemischen Reaktor sowie ein Verfahren zum Betreiben eines entsprechenden elektrochemischen Reaktors.

Ein elektrochemischer Reaktor ist bekannt aus der Offenlegunsschrift DE 102 29 309 A1, welche den nächstliegenden Stand der Technik darstellt und einen elektrochemischen Reaktor umfassend eine Brennstoffzellenanordnung und eine Brennstoff-Prozessoranordnung offenbart.

In Luftfahrzeugen werden Versorgungssysteme zur Versorgung des Innenbordbereichs mit Sauerstoff und Klarwasser und zur Versorgung entsprechender elektrischer Verbraucher mit elektrischer Energie verwendet. Üblicherweise werden hierbei die benötigten Rohstoffe, wie Sauerstoff und Klar- oder Trinkwasser in entsprechenden Behältern gespeichert, die vor Beginn des Fluges beladen werden. Nachteilig sind hierbei sowohl das hohe Gewicht der Vorratsbehälter als auch der teilweise enorme Platzbedarf, der durch die großen Speichervolumina eingenommen wird.

Es ist eine Aufgabe der vorliegenden Erfindung, eine verbesserte Versorgung von Luftfahrzeugen mit Energie und Rohstoffen bereitzustellen.

Gemäß einem Ausführungsbeispiel der vorliegenden Erfindung, wie in Anspruch 1 angegeben, wird die obige Aufgabe mittels eines elektrochemischen Reaktors zur Erzeugung von Energie, Wasserstoff, Sauerstoff und Klarwasser aus Grauwasser, einem kohlenwasserstoffhaltigen Brennstoff und Luft in einem Luftfahrzeug oder Raumfahrzeug gelöst. Der elektrochemische Reaktor umfasst hierbei eine Brennstoffzellenanordnung, im Folgenden SOFC Anordnung genannt, eine Elektrolysezellenanordnung, im Folgenden SOSE Anordnung genannt, und eine Brennstoff-Prozessoranordnung, im Folgenden FP Anordnung genannt.

Die SOFC Anordnung, die SOSE Anordnung und die FP Anordnung sind dabei in einer thermisch isolierenden Umhausung angeordnet.

Vorteilhafterweise werden hierdurch Wärmeverluste an die Umgebung wirksam vermieden, so dass eine maximale Ausnutzung der vom Gesamtsystem erzeugten Energie möglich ist.

Vorteilhafterweise wird hierdurch ein elektrochemischer Reaktor bereitgestellt, der ein autonomes System zur Bordversorgung darstellt, so dass große Speichervolumina und Gewicht zur Speicherung benötigter Rohstoffe oder auch zur Erzeugung von Energie reduziert oder gar vermieden werden können.

Gemäß einem weiteren Ausführungsbeispiel der vorliegenden Erfindung, wie in Anspruch 2 angegeben, ist die von der SOFC Anordnung erzeugte Prozesswärme hierbei in der SOSE Anordnung für einen Elektrolyseprozess und in der FP Anordnung für einen Reformingprozess nutzbar. Weiterhin ist der vorgeschlagene elektrochemische Reaktor derart ausgeführt, dass der in der SOSE Anordnung erzeugte Wasserstoff für eine zyklische Regeneration einzelner SOFC-Anoden nutzbar ist, so dass vorteilhafterweise eine separate Entschwefelungsanlage entfällt und beliebig viele thermische Lastwechsel ohne Degradationsverluste gefahren werden können.

Gemäß einem weiteren Ausführungsbeispiel der vorliegenden Erfindung, wie in Anspruch 3 angegeben, umfasst der elektrochemische Reaktor weiterhin eine Steuerungseinheit zur Steuerung oder Regelung der im Reaktor ablaufenden Prozesse derart, dass die durch die SOFC Anordnung erzeugte Energie der von der SOSE Anordnung oder von der FP Anordnung oder vom Bordbetrieb benötigten Energie entspricht, wobei der Lastbereich, in dem die Prozesse gefahren werden, kontinuierlich ist und wobei die Prozesse insgesamt zumindest einen Teil der für den Bordbetrieb benötigten elektrische Energie, den Sauerstoff und das Klarwasser liefern.

Vorteilhaft ermöglicht dies beispielsweise, dass der Wärmehaushalt der beiden Hochtemperatursysteme SOSE und SOFC stabilisiert wird, so dass ein umfangreiches Nachregeln entfällt. Weiterhin ermöglicht eine entsprechende Regelung der drei Anordnungen (SOFC, SOSE, FP), dass zu jedem Zeitpunkt die für den Bordbetrieb benötigte Energie als auch der Sauerstoff und das Klarwasser bereitgestellt wird und gleichzeitig kein Überschuss produziert wird bzw. ein möglicher Verlust auf geringem Niveau gehalten wird.

Gemäß einem weiteren Ausführungsbeispiel der vorliegenden Erfindung, wie in Anspruch 4 angegeben, ist die SOSE Anordnung oder die SOFC Anordnung zumindest teilweise aus sauerstoffionenleitenden festen Elektrolyten aufgebaut.

Hierdurch wird auf vorteilhafte Art und Weise zusätzliche Stabilität der beiden Anordnungen erreicht. Weiterhin führt die Verwendung fester Elektrolyten in den Zellen zu einer vereinfachten Herstellung und späteren Handhabung der Zellen.

Gemäß einem weiteren Ausführungsbeispiel der vorliegenden Erfindung, wie in Anspruch 5 angegeben, umfasst die SOSE Anordnung eine erste SOSE-Zelle oder eine zweite SOSE-Zelle. Weiterhin umfasst die SOFC Anordnung eine erste SOFC-Zelle oder eine zweite SOFC-Zelle und die FP Anordnung eine erste FP-Zelle oder eine zweite FP-Zelle. Zumindest zwei dieser Zellen sind hierbei parallel oder in Reihe zueinander geschaltet.

Vorteilhafterweise wird durch diese Parallel- oder Reihenschaltung oder Parallel-Reihenschaltung verschiedener Zellen eine erhöhte Flexibilität im Design des elektrochemischen Reaktors erzielt, wodurch verschiedenste Konfigurationen, angepasst an die gewünschte Systemspezifikation, ermöglicht werden. Weiterhin erleichtert eine modulartige Schaltung verschiedener Zellen oder Zellenanordnungen eine spätere Wartung bzw. den Austausch defekter Einzelzellen.

Gemäß einem weiteren vorteilhaften Ausführungsbeispiel der vorliegenden Erfindung, wie in Anspruch 6 angegeben, ist die erste SOSE-Zelle mit zumindest einer dritten SOSE-Zelle als mehrzelliger Elektrolysezellenstack oder die erste SOFC-Zelle mit zumindest einer dritten SOFC-Zelle als mehrzelliger Brennstoffzellenstack ausgebildet.

Vorteilhafterweise führt dies zu einer erhöhten Flexibilität bei der Assemblierung des Gesamtsystems, da die entsprechenden Stacks bereits werkseitig entsprechend konfiguriert werden können.

Gemäß einem weiteren Ausführungsbeispiel der vorliegenden Erfindung, wie in Anspruch 7 angegeben, ist der in der SOSE Anordnung erzeugte Sauerstoff einer Kathode der SOFC Anordnung, der Nutzung im Bordbetrieb, einer PEM-Brennstoffzelle (Polymer-Elektrolyt-Brennstoffzelle) oder einem nachgeschalteten Verbrennungsprozess zuführbar.

Durch eine entsprechende Umverteilung des erzeugten Sauerstoffs durch die Steuerungseinheit wird vorteilhafterweise die Versorgung der entsprechenden Module (SOFC Anordnung, PEM-Brennstoffzelle, nachgeschaltetes Verbrennungsmodul oder aber auch ein Bordbetriebsmodul) sichergestellt, so dass ein weitgehend autarker Betrieb des elektrochemischen Reaktors und eine stets ausreichende Produktion von Wasser, Sauerstoff, Wasserstoff und elektrischer Energie gewährleistet ist.

Gemäß einem weiteren Ausführungsbeispiel der vorliegenden Erfindung, wie in Anspruch 8 angegeben, ist das in der FP Anordnung erzeugte Kohlenmonoxyd einer Anode der SOSE Anordnung zuführbar.

Vorteilhafterweise wird hierdurch eine Absenkung der SOSE-Zellspannung erreicht.

Gemäß einer weiteren beispielhaften Ausführungsform der vorliegenden Erfindung, wie in Anspruch 9 angegeben, ist der in der SOSE Anordnung erzeugte Wasserstoff einer Anode der SOFC Anordnung, insbesondere zur Erhöhung des Umsatzes in der SOFC Anordnung oder zur Regeneration der SOFC-Anode, einer PEM-Brennstoffzelle oder einem nachgeschalteten Verbrennungsprozess zuführbar.

Neben einer verfahrenstechnischen Optimierung der im Reaktor ablaufenden Prozesse ist hierdurch insbesondere ein Abbau der durch schwefelhaltige Fraktionen im Reformat ausgebildeten Degradationen der SOFC-Anode mit Hilfe des Wasserstoffs gewährleistet. Vorteilhafterweise wird der Wasserstoff innerhalb des elektrochemischen Reaktors erzeugt, so dass eine systeminterne Entschwefelung der SOFC-Anode durchführbar ist und somit eine Entschwefelungseinheit bei der Brennstoffaufbereitung des Brennstoffs in der FP Anordnung entfällt.

Gemäß einer weiteren vorteilhaften und beispielhaften Ausführungsform der vorliegenden Erfindung, wie in Anspruch 10 angegeben, ist das in der SOFC Anordnung erzeugte Wasser einer Kathode der SOSE Anordnung, der FP Anordnung oder der Nutzung im Bordbetrieb zuführbar.

Hierdurch wird vorteilhafterweise vermieden, dass zusätzliches Wasser von externen Wasserspeichern dem System zugeführt werden muss.

Gemäß einem weiteren Ausführungsbeispiel der vorliegenden Erfindung, wie in Anspruch 11 angegeben, sind durch die Steuerungseinheit einzelne Zellen oder Verschaltungen von Zellen in Abhängigkeit vom Bordbedarf oder der im Reaktor ablaufenden Prozesse, insbesondere auch der Regenerationsprozesse, steuer- oder regelbar.

In vorteilhafter Art und Weise wird hierdurch sichergestellt, dass geringem Gesamtbedarf an Rohstoffen oder Energie eine entsprechende leistungsbezogene Regelung des Reaktors erfolgt, so dass beispielsweise einzelne Untereinheiten abgeschaltet werden können, um einem darauffolgenden Regenerations- oder Reinigungsprozess unterworfen zu werden. Bei dem Reinigungsprozess kann es sich beispielsweise um die Entschwefelung einer SOFC-Anode handeln.

Gemäß einem weiteren Ausführungsbeispiel der vorliegenden Erfindung, wie in Anspruch 12 angegeben, sind einzelne Zellen oder Verschaltungen von Zellen nach Abschalten durch eine Nachwärme einer thermischen Speicherkapazität oder die Zuführung eines inerten Gases trockenbar.

Vorteilhafterweise ist für diese Trocknung keine Zuführung systemexterner Energie notwendig, da die thermische Speicherkapazität zum Beispiel Bestandteil des elektrochemischen Reaktors ist.

Gemäß einem weiteren vorteilhaften Ausführungsbeispiel der vorliegenden Erfindung, wie in Anspruch 13 angegeben, wird ein Luftfahrzeug mit einem elektrochemischen Reaktor zur Erzeugung von Energie, Wasserstoff, Sauerstoff und Klarwasser aus Grauwasser, einem kohlenwasserstoffhaltigen Brennstoff und Luft bereitgestellt, umfassend eine Brennstoffzellenanordnung, eine Elektrolysezellenanordnung und eine Brennstoff-Prozessoranordnung, wobei die von der Brennstoffzellenanordnung erzeugte Prozesswärme in der Elektrolysezellenanordnung für einen Elektrolyseprozess und in der Brennstoff-Prozessoranordnung für einen Reformingprozess nutzbar ist und wobei der in der Elektrolysezellenanordnung erzeugte Wasserstoff zur Regeneration einer Anode der Brennstoffzellenanordnung nutzbar ist.

Vorteilhafterweise wird hierdurch ein Luftfahrzeug bereitgestellt, welches sich durch eine verbesserte Versorgung mit Energie und Rohstoffen auszeichnet, so dass große Speichervolumina und Gewicht zur Speicherung benötigter Rohstoffe oder auch zur Erzeugung von Energie reduziert oder gar vermieden werden können. Weiterhin weist das Luftfahrzeug einen elektrochemischen Reaktor auf, welcher derart ausgeführt ist, dass der in der SOSE Anordnung erzeugte Wasserstoff für eine zyklische Regeneration einzelner SOFC-Anoden nutzbar ist, so dass vorteilhafterweise eine separate Entschwefelungsanlage entfällt und beliebig viele thermische Lastwechsel ohne Degradationsverluste gefahren werden können.

Gemäß einem weiteren Ausführungsbeispiel der vorliegenden Erfindung, wie in Anspruch 14 angegeben, wird ein Verfahren zum Betreiben eines elektrochemischen Reaktors mit einer Brennstoffzellenanordnung, einer Elektrolysezellenanordnung und einer Brennstoff-Prozessoranordnung in einem Luftfahrzeug oder Raumfahrzeug angegeben, bei dem Energie, Wasserstoff, Sauerstoff und Klarwasser aus Grauwasser, einem kohlenwasserstoffhaltigen Brennstoff und Luft im elektrochemischen Reaktor erzeugt wird.

Vorteilhafterweise stellt dieses Ausführungsbeispiel ein Verfahren bereit, durch das eine verbesserte Versorgung von Luftfahrzeugen oder Raumfahrzeugen mit Energie, Wasserstoff, Sauerstoff und Klarwasser gewährleistet wird, so dass große Speichervolumina und Gewicht zur Speicherung benötigter Rohstoffe oder auch zur Erzeugung von Energie reduziert oder gar vermieden werden können.

Gemäß einem weiteren Ausführungsbeispiel der vorliegenden Erfindung, wie in Anspruch 15 angegeben, wird die von der Brennstoffzellenanordnung erzeugte Prozesswärme in der Elektrolysezellenanordnung für einen Elektrolyseprozess und in der Brennstoff-Prozessoranordnung für einen Reformingprozess genutzt, wobei der in der Elektrolysezellenanordnung erzeugte Wasserstoff zur Regeneration einer Anode der Brennstoffzellenanordnung genutzt wird.

Somit ist durch das erfindungsgemäße Verfahren der in der SOSE Anordnung erzeugte Wasserstoff für eine zyklische Regeneration einzelner SOFC-Anoden nutzbar, so dass vorteilhafterweise eine separate Entschwefelungsanlage entfällt und beliebig viele thermische Lastwechsel ohne Degradationsverluste gefahren werden können.

Weitere vorteilhafte Ausführungsbeispiele der vorliegenden Erfindung ergeben sich aus den Unteransprüchen.

Im Folgenden werden mit Verweis auf die Figuren bevorzugte Ausführungsbeispiele der vorliegenden Erfindung beschrieben.

Fig. 1 zeigt eine schematische, verfahrenstechnische Darstellung eines elektrochemischen Reaktors gemäß eines Ausführungsbeispiels der vorliegenden Erfindung.

Fig. 2 zeigt eine schematische Darstellung der im elektrochemischen Reaktor ablaufenden elektrochemischen Prozesse und der entsprechenden Versorgungskreisläufe.

Fig. 3 zeigt schematisch eine beispielhafte Anordnung mehrerer SOFC Zellen und SOSE Zellen innerhalb eines elektrochemischen Reaktors.

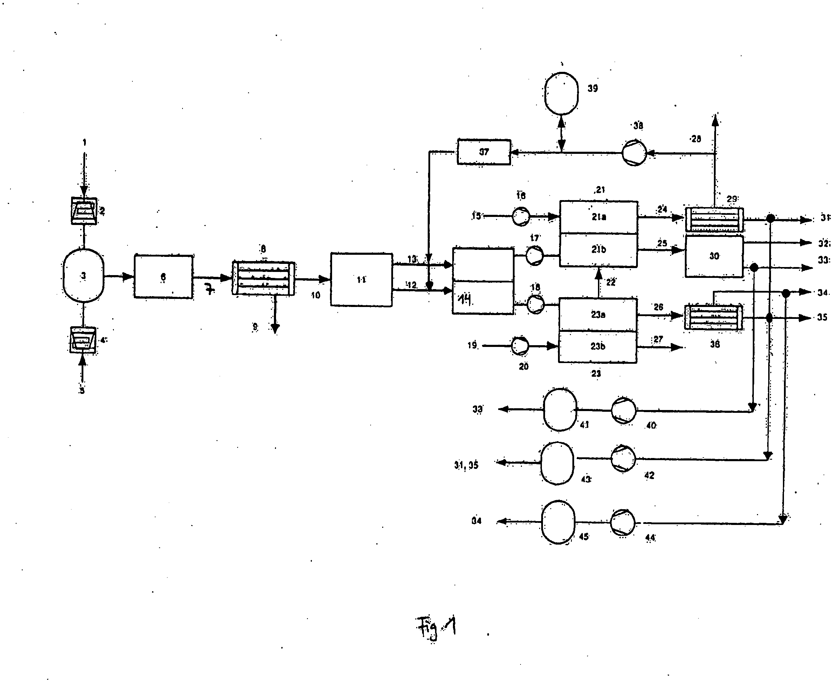

Fig. 1 zeigt eine schematische, verfahrenstechnische Darstellung eines elektrochemischen Reaktors gemäß eines Ausführungsbeispiels der vorliegenden Erfindung. Der elektrochemische Reaktor besteht in seinen wesentlichen Bestandteilen aus einer Brennstoffzellenanordnung (SOFC Anordnung) 23, einer Elektrolysezellenanordnung (SOSE Anordnung) 21 und einer Brennstoff-Prozessoranordnung (FP Anordnung) 6.

Insbesondere handelt es sich bei dem in Fig. 1 dargestellten elektrochemischen Reaktor um einen modularen, integrierten elektrochemischen Reaktor zur Erzeugung von elektrischer Energie, Wasserstoff, Sauerstoff und Wasser für die Nutzung in Luftfahrzeugen. Brennstoffzellenanordnungen, wie beispielsweise eine Festoxid-Brennstoffzellenanordnung, können erfindungsgemäß neben der Stromerzeugung auch zur Wassererzeugung verwendet werden. Elektrolysezellenanordnungen, wie beispielsweise eine Festoxid-Elektrolysezelle, können in der Ausführung als "solid oxyd steam electrolyser" Wasserstoff und Sauerstoff erzeugen.

SOFC und SOSE sind bekannte technische Systeme. Bei geeigneter Kombination dieser beiden Systeme ist es zusätzlich möglich, den von einem Brennstoff-Prozessor erzeugten Brennstoff prozesstechnisch so auszunutzen, dass bei der Erzeugung von elektrischer Energie, Wasserstoff, Sauerstoff und Wasser dem Bedarf nach ein kontinuierlicher Lastbereich gefahren werden kann und somit der Wärmehaushalt der beiden Hochtemperatursysteme SOSE und SOFC stabilisiert wird.

Die Gewinnung von Wasser und Sauerstoff ist insbesondere für die Luft- und Raumfahrt von Bedeutung, da hier autonome Systeme zur Bordversorgung benötigt werden, um große Speichervolumina und Gewichte zu vermeiden.

Dem Brennstoff-Prozessor 6 des erfindungsgemäßen elektrochemischen Reaktors wird über eine Mischereinheit 3 ein kohlenwasserstoffhaltiger Brennstoff, wie beispielsweise Kerosin 1, und Wasser, bei dem es sich beispielsweise um aufgereinigtes Grauwasser 5 handeln kann, zugeführt. Bevor Brennstoff 1 und Grauwasser 5 dem Brennstoff-Prozessor 6 zugeführt werden, erfolgt eine Verdampfung des Brennstoffs 1 in Verdampfer 2 und eine Verdampfung des aufgereinigten Grauwassers 5 in Wasserverdampfer 4. Die für die Verdampfung von Brennstoff 1 bzw. Grauwasser 5 benötigte Energie kann beispielsweise über das Kathodenabgas aus Kathode 21 a der Elektrolysezellenanordnung oder aus dem Anodenabgas der Anode 23 a der Brennstoffzellenanordnung stammen.

In der Mischeinheit 3 werden Brennstoffdampf und Grauwasserdampf vermischt und dem Brennstoff-Prozessor 6 zugeführt. Im FP 6 wird für die nachfolgenden Prozesse aus dem kohlenwasserstoffhaltigen Brennstoff 1 und dem Wasser 5 ein Reformatgas 7 erzeugt, das die Hauptbestandteile Wasserstoff, Kohlenmonoxid und Wasserdampf enthält.

Im Kondensator 8 erfolgt eine Abtrennung des Wassers der Wasserstoff-Wasserdampf-Kohlenmonoxyd-Gasmischung 7 und das abgetrennte Wasser 9 wird in einem Behälter 43 zwischengespeichert oder gepuffert und die restlichen Gase Wasserstoff und Kohlenmonoxid werden einem nachgeschalteten Molekularsieb 11 zugeführt 10 und dort getrennt.

Das abgetrennte Wasser 9 kann beispielsweise über eine eigene Pumpe (nicht dargestellt in Fig. 1) dem Zwischenspeicher 43 zugeführt werden oder aber auch über Pumpe 42, welche auch für das den Kondensatoren 29 und 36 entstammende Wasser verwendet wird (die entsprechenden Leitungen sind in Fig. 1 nicht dargestellt).

Der (ggf. schwefelhaltige) Wasserstoff 12 und das Kohlenmonoxyd 13 werden nachfolgend in einem Heizgerät 14 in voneinander getrennten Kammern erhitzt und sodann über Wasserstoffverdichter 18, respektive Kohlenstoffmonoxidverdichter 17 verdichtet und weitergeleitet.

Der verdichtete und evtl. schwefelhaltige Wasserstoff wird einer Anode 23a der SOFC Anordnung 22 zugeführt. Neben dem Wasserstoff aus dem FP 6 wird, wie im Folgenden genauer dargelegt, die Anodenseite 23a der SOFC 23 mit Wasserstoff aus der SOSE 21 versorgt. Die Aufteilung und Erzeugung der Wasserstoffströme für die SOFC 23 wird durch den Bedarf an Wasserstoff, Sauerstoff, Wasser und elektrischer Energie geregelt.

Der Sauerstoff für die SOFC-Kathode 23b wird der atmosphärischen Luft oder der Kabinenluft 19 entnommen und über einen Kompressor 20 auf den Arbeitsdruck der SOFC 23 komprimiert.

Die Wasserstoff-Wasserdampf-Gasmischung im Anodenabgasstrom der SOFC 23 wird in einem nachgeschalteten Kondensator 36 getrennt und der abgetrennte Wasserstoff wird in einem Behälter 45 zwischengespeichert oder gepuffert.

Der abgetrennte Wasserstoff 34 enthält typischerweise einen gewissen Schwefelanteil und wird zur Speicherung im Puffer für schwefelhaltigen Wasserstoff 45 durch Wasserstoffverdichter 44 verdichtet. Über Leitung 34 kann der Wasserstoff beispielsweise einem nachgeschalteten Verbrennungsprozess zugeführt werden.

Das im Kondensator 36 abgetrennte Wasser wird über Wasserpumpe 42 dem Wasserzwischenspeicher oder Wasserpuffer 43 zugeführt. Alternativ kann das Wasser über Wasserauslass 35 abgelassen werden, wie auch der abgetrennte Wasserstoff über Wasserstoffauslass 34 abgelassen werden kann.

Die Luft im Kathodenabgasstrom der SOFC 22 wird über Luftablass 27 abgelassen.

Die SOSE 21 wird auf der Kathodenseite 21 a mit Wasserdampf 15, der im Wasserdampfverdichter 16 entsprechend verdichtet wurde, versorgt. Anodenseitig 21b wird die SOSE 21 mit Kohlenmonoxid aus dem FP 6, welches im Kohlenstoffmonoxidverdichter 17 entsprechend vorverdichtet wurde, versorgt. Der Wasserdampf für die kathodenseitige Versorgung der SOSE 21 entstammt, gemäß einer beispielhaften Ausführungsform der vorliegenden Erfmdung, dem Wasserbehälter 43 und somit einem reaktorinternen Prozess. Hierfür ist beispielsweise Auslass 31 vorgesehen, über den das Wasser aus Behälter 43 Wasserverdichter 16 in Form von Wasserdampf zugeführt wird. Alternativ kann das Wasser aus Behälter 43 auch über Auslass 35 Verdampfer 4 zugeführt werden, wonach es dann an Wasserverdichter 16 weitergeleitet wird.

In der SOSE 21 werden aus dem Wasserdampf Wasserstoff und Sauerstoff erzeugt. Erfindungsgemäß bewirkt die Oxidation des Kohlenmonoxid mit dem auf der Anodenseite erzeugten Sauerstoff zu Kohlendioxid eine Reduzierung der Zellspannung der SOSE 21. Zusätzlichen Wasserdampf kann die SOSE aus dem Verdampfer 4 für den FP 6 erhalten. Den Elektrolysestrom bezieht die SOSE 21 aus der SOFC 23. Die Aufteilung und Erzeugung der Wasserdampfströme für die SOSE 21 wird durch den Bedarf an Wasserstoff, Sauerstoff, Wasser und elektrischer Energie geregelt.

Der an der Anode 21 b der SOSE 21 erzeugte Sauerstoff und das Kohlendioxid werden über Leitung 25 dem Molekularsieb 30 zugeleitet und dort aufgetrennt. Der abgetrennte Sauerstoff wird über Sauerstoffverdichter 40 verdichtet und einem Behälter 41 zur Zwischenspeicherung oder Pufferung zugeführt. Alternativ kann der abgetrennte Sauerstoff über Sauerstoffablass 33 abgelassen werden.

Das im Molekularsieb 30 abgetrennte Kohlendioxid kann über Kohlenstoffdioxidauslass 32 abgelassen werden.

Das kathodenseitig abgelassene Wasserstoff/Wasserdampf-Gemisch wird über Leitung 24 dem Kondensator 29 zugeführt. Der im Kondensator 29 abgetrennte reine Wasserstoff wird in einem Behälter 39 zwischengespeichert oder gepuffert, nachdem er von Wasserstoffverdichter 38 entsprechend verdichtet wurde. Alternativ kann der vom Kondensator 29 abgegebene Wasserstoff über Wasserstoffauslass 28 abgelassen werden. Der im Wasserstoffzwischenspeicher 39 zwischengespeicherte reine Wasserstoff kann nachfolgend, ebenso wie der direkt dem Kondensator 29 entstammende reine Wasserstoff, durch Heizgerät 37 auf eine entsprechende reaktionsfreudige Temperatur angeheizt werden und sodann beispielsweise zur Erhöhung des Umsatzes der Anodenseite 23 a der SOFC 23 zugeführt werden. Dies erfolgt beispielsweise über Leitung 12, Heizgerät 14 und Wasserstoffverdichter 18.

Alternativ kann der reaktorintern erzeugte reine Wasserstoff einer nachgeschalteten PEM-Brennstoffzelle (Polymer-Elektrolyt-Brennstoffzelle) oder einem nachgeschalteten Verbrennungsprozess zugeführt werden.

Demnach werden der erzeugte Sauerstoff und das erzeugte Wasser in Behältern 41, 43 zwischengespeichert oder gepuffert und werden entweder im Gesamtprozess wieder genutzt oder der Bordversorgung für Wasser oder Sauerstoff zugeführt. Der zwischengespeicherte bzw. gepufferte Wasserstoff (rein) kann entweder der SOFC 23 wieder zugeführt werden oder in einem anderen Brennstoffzellenprozess oder Verbrennungsprozess genutzt werden.

Durch eine räumliche Integration von SOFC 23, SOSE 21 und FP 6 in eine Einhausung wird die in der SOFC 23 freiwerdende Reaktionswärme als zusätzliche Prozesswärme im SOSE- und im FP-Prozess genutzt.

Zu beachten ist, dass das Wasser für die Erzeugung von Wasserdampf in dem Verdampfer 4 für den FP 6 und die SOSE 21 aufgereinigtes Grauwasser 5 aus dem Bordbetrieb und/oder Wasser aus dem Zwischenspeicher oder Pufferspeicher 43 ist.

Vorteilhafterweise wird die Heizleistung für den Wasserverdampfer 4 und den Kerosinverdampfer 2 dem Kathodenabgas der SOSE 21 und dem Anodenabgas der SOFC 23 jeweils vor den Kondensatoren 29, 36 entnommen.

Weiterhin sind, gemäß einem Ausführungsbeipiel der vorliegenden Erfindung, die Brennstoffzellen 23 und Elektrolysezellen 21 mehrzellig als Brennstoffzellenstack und Elektrolysezellenstack ausgeführt.

Durch die Integration der drei Reaktoren FP 6, SOSE 21 und SOFC 23 in einer thermisch isolierenden Einhausung wird die von der SOFC 23 erzeugte Prozesswärme in der SOSE 21 und im FP 6 für den Elektrolyse- respektive Reformingprozess genutzt. Hierdurch werden bei Ablauf des Gesamtprozesses die Energieverluste, welche z. B. durch zusätzliche Wärmeübertragungseinheiten entstehen, wirksam minimiert.

Bei dem Reformingprozess, der im FP abläuft, handelt es sich beispielsweise um die Umwandlung von einem kohlenwasserstoffhaltigen Brennstoff (wie zum Beispiel Kerosin) in ein Reformatgas, das als Hauptbestandteile Wasserstoff, Kohlenmonoxid und Wasserdampf enthält.

Heutzutage geliefertes Kerosin für die zivile Luftfahrt enthält z. B. ca. 300 ppm Schwefel und es ist bekannt, dass die Anode der SOFC 23 durch Schwefel vergiftet werden kann. Um die an der SOFC-Anode 23 a durch schwefelhaltige Fraktionen im Reformat ausgebildeten Degradationen abzubauen, wird erfindungsgemäß der in der SOSE erzeugte oder der zwischengespeicherte bzw. gepufferte Wasserstoff zur Regeneration der SOFC-Anode 23 a zugeführt. Da der Wasserstoffbedarf für die Regeneration der durch Schwefel vergifteten SOFC-Anode 23 a vom übrigen Bedarf von Sauerstoff, Wasser, elektrischer Energie und Betriebszeit abhängt, wird durch die Zwischenspeicherung oder Pufferung immer eine ausreichende Menge Wasserstoff bereitgehalten. Durch diese Art des Regenerationsverfahrens kann eine Entschwefelungseinheit bei der Brennstoffaufbereitung des Brennstoffs in FP 6 entfallen.

Die für den Gesamtprozess notwendigen verfahrenstechnischen Einrichtungen sind nach den allgemein bekannten technischen Regeln auszuführen.

Gemäß einer bevorzugten Ausführungsform der vorliegenden Erfindung sind mehrere Brennstoffzellenstacks oder Elektrolysezellenstacks oder Brennstoff-Prozessoren in Parallel- oder Reihenschaltung oder Parallel-Reihenschaltung integriert. Weiterhin ist es gemäß einer beispielhaften Ausführungsform der vorliegenden Erfindung vorgesehen, dass Subsysteme bestehend aus mehreren Brennstoffzellenstacks und Elektrolysezellenstacks und Brennstoff-Prozessoranordnungen in Parallel- oder Reihenschaltung oder Parallel-Reihenschaltung zu einem Gesamtsystem oder Subsystem verschaltet werden. Ein einzelnes Subsystem kann hierbei aus einem FP-SOSE-SOFC-System oder einem FP-SOFC-System oder einem SOSE-SOFC-System oder einem FP-System oder SOFC-System oder SOSE-System bestehen.

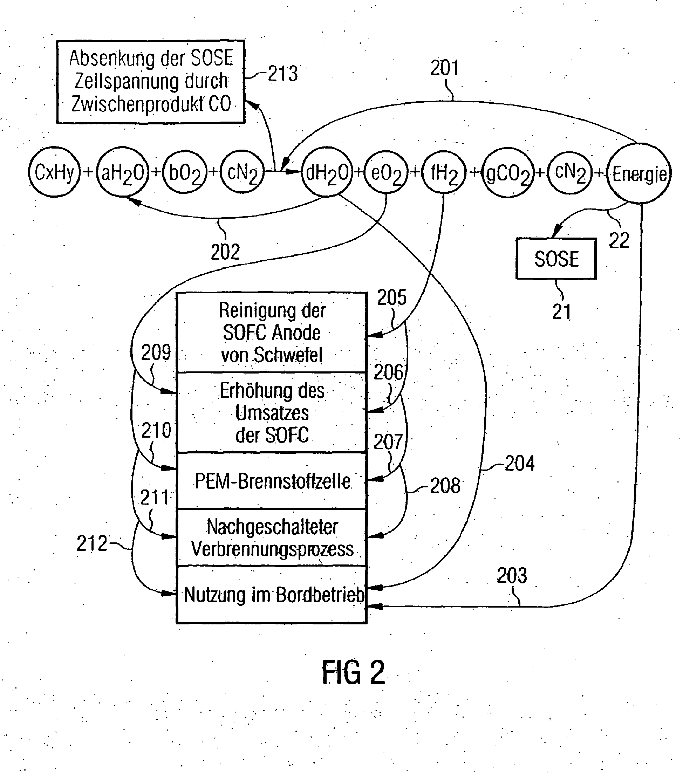

Fig. 2 zeigt eine schematische Darstellung der im elektrochemischen Reaktor ablaufenden elektrochemischen Prozesse und der entsprechenden Versorgungskreisläufe. Im elektrochemischen Reaktor werden ein kohlenwasserstoffhaltiger Brennstoff CxHy, a Anteile Wasser, b Anteile Sauerstoff und c Anteile Stickstoff zu d Anteile Klarwasser, e Anteile Sauerstoff, f Anteile reinem Wasserstoff, g Anteile Kohlendioxyd, h Anteile Stickstoff und Energie umgesetzt. Bei der Energie handelt es sich einerseits um thermische Energie, die zur Verdampfung des kohlenwasserstoffhaltigen Brennstoffs oder zur Verdampfung von dem prozesszugeführten Wasser oder aber auch für einen Elektrolyseprozess in der SOSE Anordnung oder einem Reformingprozess in der FP Anordnung zugeführt werden kann.

Andererseits handelt es sich bei der erzeugten Energie aber auch um in der SOFC Anordnung erzeugten elektrischen Energie, welche einerseits für den Bordbetrieb 203 genutzt werden kann oder aber auch der SOSE 21 über Stromzuführung 22 für den Elektrolysezellenprozess zugeführt werden kann (s. Fig. 1).

Das im Prozess erzeugte Wasser kann erfindungsgemäß einerseits dem Prozess erneut zugeführt werden 202 oder aber auch für die Nutzung im Bordbetrieb 204 Anwendung finden.

Der im Prozess erzeugte Sauerstoff findet entweder für die Nutzung im Bordbetrieb Anwendung 212 oder er wird einem nachgeschalteten Verbrennungsprozess 211 oder einer PEM-Brennstoffzelle 210 zugeführt. Weiterhin kann der erzeugte Sauerstoff der Erhöhung des Umsatzes der SOFC 209 dienen.

Der erzeugte (reine) Wasserstoff wird beispielsweise zur Reinigung der SOFC-Anode von Schwefel 205 verwendet. Durch diese Art des Regenerationsverfahrens kann vorteilhafterweise eine Entschwefelungseinheit bei der Brennstoffaufbereitung des Brennstoffs für den FP entfallen. Weiterhin kann der erzeugte Wasserstoff zur Erhöhung des Umsatzes der SOFC 206 verwendet werden oder aber auch einem nachgeschalteten Verbrennungsprozess 208 oder einer PEM-Brennstoffzelle 207 zugeführt werden.

Das als Zwischenprodukt im FP erzeugte Kohlenmonoxid ist erfindungsgemäß, nachdem es durch Molekularsieb 11 (s. Fig. 1) abgetrennt wurde, zur Absenkung der SOSE-Zellenspannung 213 verwendbar.

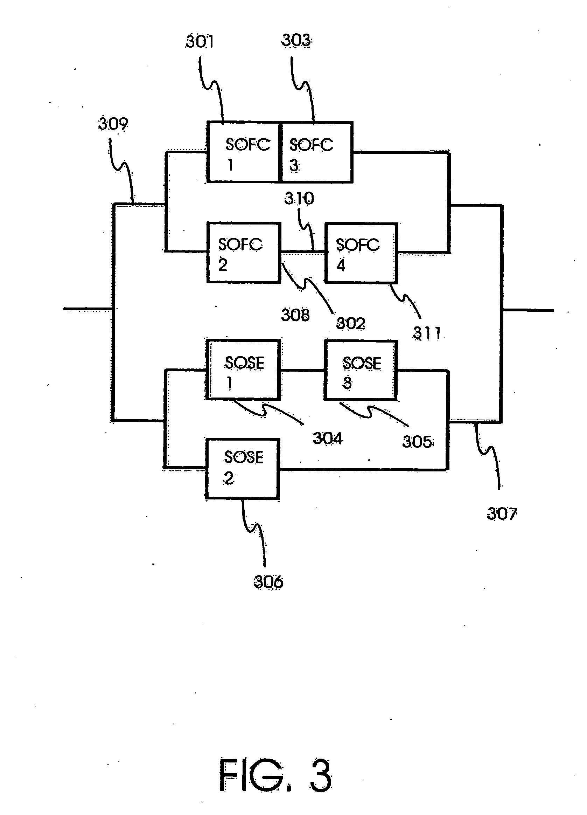

Fig. 3 zeigt schematisch eine beispielhafte Anordnung mehrerer SOFC Zellen und SOSE Zellen innerhalb eines erfindungsgemäßen elektrochemischen Reaktors. Die Anordnung umfasst hierbei eine erste SOFC Zelle 301, eine zweite SOFC Zelle 302, eine dritte SOFC Zelle 303 und eine vierte SOFC Zelle 311. Erste und dritte SOFC Zellen 301, 303 sind hierbei als Brennstoffzellenstack ausgebildet. Zweite und vierte SOFC Zellen 302, 311 sind über Leitungssystem 310 seriell miteinander verschaltet und zusätzlich über Leitungssysteme 309 und 307 parallel mit dem Brennstoffzellenstack 301, 303 verschaltet.

Weiterhin umfasst die Anordnung eine erste SOSE Zelle 304, eine zweite SOSE Zelle 306 und eine dritte SOSE Zelle 305. Erste und dritte SOSE Zellen 304, 305 sind hierbei über Leitungssystem 308 seriell miteinander verbunden und mit der zweiten SOSE Zelle 306 über Leitungssysteme 309, 307 parallel verschaltet. Weiterhin sind die SOSE Zellen 304, 305, 306 über die Leitungssysteme 309, 307 mit den SOFC Zellen 301, 302, 303, 304 verbunden.

Die Erfindung beschränkt sich in ihrer Ausführung nicht auf die in den Figuren dargestellten beispielhaften Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Elektrochemischer Reaktor in einem Luftfahrzeug oder Raumfahrzeug, umfassend:
eine Brennstoffzellenanordnung (23);
eine Elektrolysezellenanordnung (21);
eine Brennstoff-Prozessoranordnung (6);
**dadurch gekennzeichnet, dass** der elektrochemische Reaktor zur Erzeugung von Energie, Wasserstoff, Sauerstoff und Klarwasser aus Grauwasser, einem kohlenwasserstoffhaltigen Brennstoff und Luft einsetzbar ist;
wobei Brennstoffzellenanordnung, Elektrolysezellenanordnung und Brennstoff-Prozessoranordnung in einer thermisch isolierenden Umhausung angeordnet sind.

2. Elektrochemischer Reaktor nach Anspruch 1,
wobei die von der Brennstoffzellenanordnung erzeugte Prozesswärme in der Elektrolysezellenanordnung für einen Elektrolyseprozess und in der Brennstoff-Prozessoranordnung für einen Reformingprozess nutzbar ist; und
wobei der in der Elektrolysezellenanordnung erzeugte Wasserstoff zur Regeneration einer Anode (23a) der Brennstoffzellenanordnung nutzbar ist.

3. Elektrochemischer Reaktor nach Anspruch 1 oder 2, weiterhin umfassend:
eine Steuerungseinheit zur Steuerung oder Regelung der im Reaktor ablaufenden Prozesse derart, dass die durch die Brennstoffzellenanordnung erzeugte Energie der von der Elektrolysezellenanordnung oder von der Brennstoff-Prozessoranordnung oder vom Bordbetrieb benötigten Energie entspricht;
wobei der Lastbereich, in dem die Prozesse gefahren werden, kontinuierlich ist; und
wobei die Prozesse insgesamt den für den Bordbetrieb benötigten Sauerstoff, das Klarwasser und zumindest einen Teil der benötigten elektrischen Energie liefern.

4. Elektrochemischer Reaktor nach einem der vorhergehenden Ansprüche, wobei die Elektrolysezellenanordnung oder die Brennstoffzellenanordnung Sauerstoffionen leitende feste Elektrolyten umfasst.

5. Elektrochemischer Reaktor nach einem der vorhergehenden Ansprüche,
wobei die Elektrolysezellenanordnung eine erste Elektrolysezelle (304) und eine zweite Elektrolysezelle (306) umfasst;
wobei die Brennstoffzellenanordnung eine erste Brennstoffzelle (301) und eine zweite Brennstoffzelle (302) umfasst;
wobei die Brennstoff-Prozessoranordnung eine erste Brennstoff-Prozessorzelle und eine zweite Brennstoff-Prozessorzelle umfasst; und
wobei zwei Zellen ausgewählt aus der Gruppe bestehend aus erster Elektrolysezelle, zweiter Elektrolysezelle, erster Brennstoffzelle, zweiter Brennstoffzelle, erster Brennstoff-Prozessorzelle und zweiter Brennstoff-Prözessorzelle parallel oder in Reihe zueinander geschaltet sind.

6. Elektrochemischer Reaktor nach einem der vorhergehenden Ansprüche,
wobei die erste Elektrolysezelle (304) mit zumindest einer dritten Elektrolysezelle (305) als mehrzelliger Elektrolysezellenstack oder die erste Brennstoffzelle mit zumindest einer dritten Brennstoffzelle als mehrzelliger Brennstoffzellenstack ausgebildet ist.

7. Elektrochemischer Reaktor nach einem der vorhergehenden Ansprüche,
wobei der in der Elektrolysezellenanordnung erzeugte Sauerstoff einer Kathode (23b) der Brennstoffzellenanordnung, der Nutzung im Bordbetrieb (212), einer PEM-Brennstoffzelle (210) oder einem nachgeschalteten Verbrennungsprozess (211) zuführbar ist.

8. Elektrochemischer Reaktor nach einem der vorhergehenden Ansprüche,
wobei das in der Brennstoff-Prozessoranordnung erzeugte Kohlenmonoxid einer Anode (21b) der Elektrolysezellenanordnung zuführbar ist.

9. Elektrochemischer Reaktor nach einem der vorhergehenden Ansprüche,
wobei der in der Elektrolysezellenanordnung erzeugte Wasserstoff einer Anode (23a) der Brennstoffzellenanordnung, insbesondere zur Erhöhung des Umsatzes in der Brennstoffzellenanordnung oder zur Regeneration einer Anode der Brennstoffzelle (205), einer PEM-Brennstoffzelle (207) oder einem nachgeschalteten Verbrennungsprozess (208) zuführbar ist.

10. Elektrochemischer Reaktor nach einem der vorhergehenden Ansprüche,
wobei das in der Brennstoffzellenanordnung erzeugte Wasser einer Kathode (21a) der Elektrolysezellenanordnung, der Brennstoff-Prozessoranordnung (6) oder der Nutzung im Bordbetrieb (204) zuführbar ist.

11. Elektrochemischer Reaktor nach einem der vorhergehenden Ansprüche,
wobei durch die Steuerungseinheit einzelne Zellen oder Verschaltungen von Zellen in Abhängigkeit vom Bordbedarf oder der im Reaktor ablaufenden Prozesse, insbesondere auch der Regenerationsprozesse, steuer- oder regelbar sind.

12. Elektrochemischer Reaktor nach einem der vorhergehenden Ansprüche,
wobei einzelne Zellen oder Verschaltungen von Zellen nach Abschalten durch eine Nachwärme einer thermischen Speicherkapazität oder die Zuführung eines inerten Gases trockenbar sind.

13. Luftfahrzeug mit einem elektrochemischen Reaktor nach einem der Ansprüche 1 bis 12.

14. Verfahren zum Betreiben eines elektrochemischen Reaktors mit einer Brennstoffzellenanordnung (23), einer Elektrolysezellenanordnung (21) und einer Brennstoff-Prozessoranordnung (6) in einem Luftfahrzeug oder Raumfahrzeug, umfassend den Schritt:
Erzeugung von Energie, Wasserstoff, Sauerstoff und Klarwasser aus Grauwasser, einem kohlenwasserstoffhaltigen Brennstoff und Luft im elektrochemischen Reaktor;
wobei Brennstoffzellenanordnung, Elektrolysezellenanordnung und Brennstoff-Prozessoranordnung in einer thermisch isolierenden Umhausung angeordnet sind.

15. Verfahren nach Anspruch 14,
wobei die von der Brennstoffzellenanordnung erzeugte Prozesswärme in der Elektrolysezellenanordnung für einen Elektrolyseprozess und in der Brennstoff-Prozessoranordnung für einen Reformingprozess genutzt wird; und
wobei der in der Elektrolysezellenanordnung erzeugte Wasserstoff zur Regeneration einer Anode (23a) der Brennstoffzellenanordnung genutzt wird.

16. Verfahren nach Anspruch 14 oder 15,
wobei eine Steuerungseinheit die im Reaktor ablaufenden Prozesse derart steuert oder regelt, dass die durch die Brennstoffzellenanordnung erzeugte Energie der von der Elektrolysezellenanordnung oder der Brennstoff-Prozessoranordnung oder vom Bordbetrieb benötigten Energie entspricht;
wobei der Lastbereich, in dem die Prozesse gefahren werden, kontinuierlich ist; und
wobei die Prozesse insgesamt die für den Bordbetrieb benötigte elektrische Energie, den Sauerstoff und das Klarwasser liefern.

17. Verfahren nach einem der Ansprüche 14 bis 16, wobei der in der Elektrolysezellenanordnung erzeugte Sauerstoff einer Kathode der Brennstoffzellenanordnung (209), der Nutzung im Bordbetrieb (212), einer PEM-Brennstoffzelle (210) oder einem nachgeschalteten Verbrennungsprozess (211) zugeführt wird.

18. Verfahren nach einem der Ansprüche 14 bis 17,
wobei das in der Brennstoff-Prozessoranordnung erzeugte Kohlenmonoxid einer Anode der Elektrolysezellenanordnung zugeführt wird (213).

19. Verfahren nach einem der Ansprüche 14 bis 18,
wobei der in der Elektrolysezellenanordnung erzeugte Wasserstoff einer Anode der Brennstoffzellenanordnung (206); insbesondere zur Erhöhung des Umsatzes in der Brennstoffzellenanordnung oder zur Regeneration der Anode der Brennstoffzellenanordnung (205), einer PEM-Brennstoffzelle (207) oder einem nachgeschalteten Verbrennungsprozess (208) zugeführt wird.

20. Verfahren nach einem der Ansprüche 14 bis 19,
wobei das in der Brennstoffzellenanordnung erzeugte Wasser einer Kathode der Elektrolysezellenanordnung (202), der Brennstoff-Prozessoranordnung oder der Nutzung im Bordbetrieb (204) zugeführt wird.

21. Verfahren nach einem der Ansprüche 14 bis 20,
wobei die Steuerungseinheit einzelne Zellen oder Verschaltungen von Zellen in Abhängigkeit vom Bordbedarf oder der im Reaktor ablaufenden Prozesse, insbesondere auch der Regenerationsprozesse, steuert oder regelt.

22. Verfahren nach einem der Ansprüche 14 bis 21,
wobei einzelne Zellen oder Verschaltungen von Zellen nach Abschalten durch eine Nachwänne einer thermischen Speicherkapazität oder die Zufuhrung eines inerten Gases getrocknet werden.

## Claims

1. Electrochemical reactor in an aircraft or spacecraft, comprising:
a fuel cell assembly (23),
an electrolytic cell assembly (21),
a fuel process assembly (6)
**characterised in that** the electrochemical reactor can be used to generate energy, hydrogen, oxygen and clear water from grey water, a hydrocarbon-containing fuel and air,
wherein the fuel cell assembly, electrolytic cell assembly and fuel processor assembly are arranged in a thermally insulating housing.

2. Electrochemical reactor according to claim 1,
wherein the process heat generated by the fuel cell assembly can be used in the electrolytic cell assembly for an electrolytic process and in the fuel processor assembly for a reforming process and
wherein the hydrogen generated in the electrolytic cell assembly can be used for the regeneration of an anode (23a) of the fuel cell assembly.

3. Electrochemical reactor according to claim 1 or 2, further comprising:
a control unit for controlling or regulating the processes occurring in the reactor in such a way that the energy generated by the fuel cell assembly corresponds to the energy required by the electrolytic cell assembly or by the fuel-processor assembly or by the on-board operation,
wherein the load range in which the processes take place is continuous and
wherein the processes overall supply the oxygen required for the on-board operation, the clear water and at least a part of the electrical energy required.

4. Electrochemical reactor according to any one of the preceding claims, wherein the electrolytic cell assembly or the fuel cell assembly comprises oxygen ion conducting solid electrolytes.

5. Electrochemical reactor according to any one of the preceding claims,
wherein the electrolytic cell assembly comprises a first electrolytic cell (304) and a second electrolytic cell (306),
wherein the fuel cell assembly comprises a first fuel cell (301) and a second fuel cell (302),
wherein the fuel cell assembly comprises a first fuel processor cell and a second fuel processor cell,
wherein two cells selected from the group consisting of a first electrolytic cell, second electrolytic cell, first fuel cell, second fuel cell, first fuel processor cell and second fuel processor cell are connected parallel or in series to one another.

6. Electrochemical reactor according to any one of the preceding claims,
wherein the first electrolytic cell (304) is embodied with at least a third electrolytic cell (305) as a multi-cellular electrolytic cell stack or the first fuel cell is embodied with at least a third fuel cell as a multi-cellular fuel cell stack.

7. Electrochemical reactor according to any one of the preceding claims,
wherein the oxygen generated in the electrolytic cell assembly can be supplied to a cathode (232b) of the fuel cell assembly, usage in the on-board operation (212), a PEM fuel cell (210) or a downstream combustion process (211).

8. Electrochemical reactor according to any one of the preceding claims,
wherein the carbon monoxide generated in the fuel processor assembly can be supplied to an anode (21b) of the electrolytic cell assembly.

9. Electrochemical reactor according to any one of the preceding claims,
wherein the hydrogen generated in the electrolytic cell assembly can be supplied to an anode (23 a) of the fuel cell assembly in particular to increase the conversion in the fuel cell assembly or for the regeneration of an anode of the fuel cell (205), a PEM fuel cell (207) or a downstream combustion process (208).

10. Electrochemical reactor according to any one of the preceding claims,
wherein water generated in the fuel cell assembly can be supplied to a cathode (21a) of the electrolytic cell assembly, the fuel process assembly (6) or the usage in the on-board operation (204).

11. Electrochemical reactor according to any one of the preceding claims,
wherein the control unit is able to control or regulate individual cells or interconnections of cells in accordance with the on-board requirements or processes taking place in the reactor, in particular also the regeneration processes.

12. Electrochemical reactor according to any one of the preceding claims,
wherein individual cells or interconnections of cells can be dried after switching off by residual heat from a thermal storage capacity or by supplying an inert gas.

13. Aircraft with an electrochemical reactor according to any of claims 1 to 12.

14. Method for operating an electrochemical reactor with a fuel cell assembly (23) of an electrolytic cell arrangement (21) and a fuel-processor assembly (6) in an aircraft or spacecraft, comprising the step:
generation of energy, hydrogen, oxygen and clear water from grey water, a hydrocarbon-containing fuel and air in the electrochemical reactor,
wherein the fuel cell assembly, electrolytic cell assembly and fuel processor assembly in are arranged in a thermally insulating housing.

15. Method according to claim 14,
wherein the process heat generated by the fuel cell assembly is used in the electrolytic cell assembly for an electrolytic process and in the fuel-processor assembly for a reforming process and
wherein the hydrogen generated in the electrolytic cell assembly is used for the regeneration of an anode (23a) of the fuel cell assembly.

16. Method according to claim 14 or 15,
wherein a control unit control or regulates the processes taking place in the reactor in such a way that the energy generated by the fuel cell assembly corresponds to the energy required by the electrolytic cell assembly or the fuel-processor assembly or by the on-board operation,
wherein the load range in which the processes take place is continuous and
wherein the processes overall supply the electrical energy required for the on-board operation, the oxygen and the clear water.

17. Method according to any one of claims 14 to 16,
wherein the oxygen generated in the electrolytic cell assembly is supplied to a cathode of the fuel cell assembly (209) of the usage in the on-board operation (212), a PEM fuel cell (210) or a downstream combustion process (211).

18. Method according to any one of claims 14 to 17,
wherein the carbon monoxide generated in the fuel-processor assembly is supplied to an anode of the electrolytic cell assembly (213).

19. Method according to any one of claims 14 to 18,
wherein the hydrogen generated in the electrolytic cell assembly is supplied to an anode of the fuel cell assembly (206) in particular to increase the conversion in the fuel cell assembly or for the regeneration of the anode of the fuel cell assembly (205), a PEM fuel cell (207) or a downstream combustion process (208).

20. Method according to any one of claims 14 to 19,
wherein the water generated in the fuel cell is supplied to a cathode of electrolytic cell assembly (202), the fuel processor assembly or the usage in the on-board operation (204).

21. Method according to any one of claims 14 to 20,
wherein the control unit controls or regulates individual cells or interconnections of cells in accordance with the on-board requirement or the processes taking place in the reactor processes, in particular also the regeneration processes.

22. Method according to any one of claims 14 to 21,
wherein individual cells or interconnections of cells are dried after switching off by residual heat from a thermal storage capacity or by supplying an inert gas.

## Revendications

1. Réacteur électrochimique dans un aéronef ou un véhicule spatial, comprenant
un agencement de pile à combustible (23),
un agencement de cellule électrolytique (21),
un agencement de processeur pour combustible (6),
**caractérisé en ce que** le réacteur électrochimique est utilisable pour produire de l'énergie, de l'hydrogène, de l'oxygène et de l'eau claire à partir d'eau grise, un combustible hydrocarburé et de l'air, l'agencement de pile à combustible, l'agencement de cellule électrolytique et l'agencement de processeur pour combustible étant disposés dans une enceinte d'isolation thermique.

2. Réacteur électrochimique suivant la revendication 1, la chaleur de fabrication produite par l'agencement de pile à combustible étant utilisable dans l'agencement de cellule électrolytique pour un processus d'électrolyse et dans l'agencement de processeur pour combustible pour un processus de réformage, et l'hydrogène produit dans l'agencement de cellule électrolytique étant utilisable pour la régénération d'une anode (23a) de l'agencement de pile à combustible.

3. Réacteur électrochimique suivant l'une des revendications 1 et 2, comprenant en outre: une unité de commande pour la commande ou la régulation des processus se déroulant dans le réacteur, de telle sorte que l'énergie, produite par l'agencement de pile à combustible, correspond à l'énergie requise par l'agencement de cellule électrolytique ou par l'agencement de processeur pour combustible ou par le service de bord, la plage de charge, dans laquelle sont conduits les processus, étant continue, et les processus fournissant au total l'oxygène requis pour le service de bord, l'eau claire et au moins une partie de l'énergie électrique requise.

4. Réacteur électrochimique suivant l'une des revendications précédentes, l'agencement de cellule électrolytique ou l'agencement de pile à combustible comprenant des électrolytes solides conducteurs d'ions oxygène.

5. Réacteur électrochimique suivant l'une des revendications précédentes,
l'agencement de cellules électrolytiques comprenant une première cellule électrolytique (304) et une seconde cellule électrolytique (306), l'agencement de piles à combustible comprenant une première pile à combustible (301) et une seconde pile à combustible (302),
l'agencement de processeurs pour combustible comprenant une première cellule de processeur pour combustible et une seconde cellule de processeur pour combustible, et
deux cellules, sélectionnées parmi le groupe constitué d'une première cellule électrolytique, d'une seconde cellule électrolytique, d'une première pile à combustible, d'une seconde pile à combustible, d'une première cellule de processeur pour combustible et d'une seconde cellule de processeur pour combustible, étant montées en parallèle ou en série l'une par rapport à l'autre.

6. Réacteur électrochimique suivant l'une des revendications précédentes, la première cellule électrolytique (304) avec au moins une troisième cellule électrolytique (305) étant configurée sous forme d'empilage de cellules électrolytiques multicellulaire ou la première pile à combustible avec au moins une troisième pile à combustible étant configurée sous forme d'empilage de piles à combustible multicellulaire.

7. Réacteur électrochimique suivant l'une des revendications précédentes, l'oxygène produit dans l'agencement de cellules électrolytiques pouvant être transmis à une cathode (23b) de l'agencement de piles à combustible, à l'utilisation dans le service de bord (212), à une pile à combustible PEM (210) ou pour un processus de combustion aval (211).

8. Réacteur électrochimique suivant l'une des revendications précédentes, le monoxyde de carbone produit dans l'agencement de processeurs pour combustible pouvant être transmis à une anode (21b) de l'agencement de cellules électrolytiques.

9. Réacteur électrochimique suivant l'une des revendications précédentes, l'hydrogène produit dans l'agencement de cellules électrolytiques pouvant être transmis à une anode (23a) de l'agencement de piles à combustible, en particulier pour la hausse de la conversion dans l'agencement de piles à combustible ou pour la régénération d'une anode de la pile à combustible (205), à une pile à combustible PEM (207) ou à un processus de combustion aval (208).

10. Réacteur électrochimique suivant l'une des revendications précédentes, l'eau produite dans l'agencement de piles à combustible pouvant être transmise à une cathode (21a) de l'agencement de cellules électrolytiques, à l'agencement de processeur pour combustible (6) ou pour l'utilisation dans le service de bord (204).

11. Réacteur électrochimique suivant l'une des revendications précédentes, des cellules individuelles ou câblages de cellules pouvant être commandés ou réglés par l'unité de commande en fonction de la consommation de bord ou des processus se déroulant dans le réacteur, en particulier également en fonction des processus de régénération.

12. Réacteur électrochimique suivant l'une des revendications précédentes, des cellules individuelles ou câblages de cellules pouvant être séchés, après la déconnexion, par une chaleur résiduelle d'une capacité de stockage thermique ou par l'arrivée d'un gaz inerte.

13. Aéronef comprenant un réacteur électrochimique suivant l'une des revendications 1 à 12.

14. Procédé de fonctionnement d'un réacteur électrochimique avec un agencement de pile à combustible (23), un agencement de cellule électrolytique (21) et un agencement de processeur pour combustible (6), dans un aéronef ou un véhicule spatial, comprenant l'étape : de production d'énergie, d'hydrogène, d'oxygène et d'eau claire à partir d'eau grise, d'un combustible hydrocarburé et d'eau dans le réacteur électrochimique, l'agencement de pile à combustible, l'agencement de cellule électrolytique et l'agencement de processeur pour combustible étant disposés dans une enceinte d'isolation thermique.

15. Procédé suivant la revendication 14, la chaleur de fabrication, produite par l'agencement de pile à combustible, étant utilisée dans l'agencement de cellule électrolytique pour un processus d'électrolyse et dans l'agencement de processeur pour combustible pour un processus de réformage, et l'hydrogène produit dans l'agencement de cellule électrolytique étant utilisé pour la régénération d'une anode (23a) de l'agencement de pile à combustible.

16. Procédé suivant l'une des revendications 14 ou 15, dans lequel
une unité de commande contrôle ou règle les processus se déroulant dans le réacteur de telle sorte que l'énergie, produite par l'agencement de pile à combustible, correspond à l'énergie requise par l'agencement de cellule électrolytique ou par l'agencement de processeur pour combustible ou par le service de bord,
la plage de charge, dans laquelle sont conduits les procédés, est continue, et
les processus fournissent au total l'énergie électrique requise pour le service de bord, l'oxygène et l'eau claire.

17. Procédé suivant l'une des revendications 14 à 16, dans lequel l'oxygène produit dans l'agencement de cellules électrolytiques est transmis à une cathode de l'agencement de piles à combustible (209), à l'utilisation dans le service de bord (212), à une pile à combustible PEM (210) ou à un processus de combustion aval (211).

18. Procédé suivant l'une des revendications 14 à 17, dans lequel le monoxyde de carbone, produit dans l'agencement de processeurs pour combustible, est transmis à une anode de l'agencement de cellules électrolytiques (213).

19. Procédé suivant l'une des revendications 14 à 18, dans lequel l'hydrogène, produit dans l'agencement de cellules électrolytiques, est transmis à une anode de l'agencement de piles à combustible (206), en particulier pour la hausse de la conversion dans l'agencement de piles à combustible ou pour la régénération de l'anode de l'agencement de piles à combustible (205), à une pile à combustible PEM (207) ou à un processus de combustion aval (208).

20. Procédé suivant l'une des revendications 14 à 19, dans lequel l'eau produite dans l'agencement de piles à combustible est transmise à une cathode de l'agencement de cellules électrolytiques (202), à l'agencement de processeurs pour combustible ou pour l'utilisation dans le service de bord (204).

21. Procédé suivant l'une des revendications 14 à 20, dans lequel l'unité de commande contrôle ou règle des cellules individuelles ou des câblages de cellules en fonction de la consommation de bord ou des processus se déroulant dans le réacteur, en particulier également en fonction des processus de régénération.

22. Procédé suivant l'une des revendications 14 à 21, dans lequel des cellules individuelles ou des câblages de cellules sont séchés après la déconnexion par une chaleur résiduelle d'une capacité de stockage thermique ou par l'arrivée d'un gaz inerte.
